# EUROPEAN PATENT APPLICATION

(11) **EP 4 544 916 A1**
(43) Date of publication of application: **30.04.2025**
(21) Application number: 24020320.8
(22) Date of filing: 18.10.2024
(51) Int. Cl.: A23D 9/013, A23D 9/05, A23L 33/115, A23L 33/12

(54) **FOODSTUFF CONTAINING ETHYL ESTERS OF FATTY ACIDS OF VEGETABLE OILS AND SILICA AND ITS METHOD OF PRODUCTION**

(30) Priority: 23.10.2023 PL 44646923
(71) Applicant: Fila, Wojciech Jerzy, 01-829 Warszawa (PL)
(72) Inventor: Fila, Wojciech Jerzy, 01-829 Warszawa (PL)
(74) Representative: Pomianek, Grazyna

(57) **Abstract**

A foodstuff contains a mix of vegetable oil(s) and silica, or ethyl esters of fatty acids of vegetable oil(s) and silica, where the amount of ethyl esters of fatty acids of vegetable oil(s) or of vegetable oil(s) is between 60% and 74% by weight, and the amount of silica is between 40% and 26% by weight, and the amounts of the components of the said mix add up to 100% of the mix by weight. A foodstuff production method consists in mixing its components preferably at the temperature of 20-24°C until the product in the form of powder is obtained.

## Description

The invention concerns a foodstuff containing ethyl esters of fatty acids of vegetable oils, or fatty acids of vegetable oils, and its production method.

Commonly known is the beneficial effect of the omega-3 (ALA) and omega-9 (LA) fatty acids on the human organism.

The products containing ethyl esters of fatty acids, particularly of the omega-3 (ALA) and omega-9 (LA) fatty acids, offered in the market today take the form of an oily liquid and constitute a challenge for the producers and consumers in terms of their stability, transport, storage, further processing, and use in production processes. The aspects of taste, odour, flammability, and destructive impact on various rubber and plastic elements of the production lines impose numerous limitations on broad application in dairy products, sweet snacks and cookies, ice cream, beverages, and other products where the fundamental problem consists in the use of the oily form in the production process, and in meagre possibilities of eliminating the specific taste of ethyl esters.

Known from patent document PL 228 401 B1 is health-promoting foodstuff containing ethyl esters of fatty acids, especially linseed oil, and its production method. The said foodstuff takes the form of powder-filled microcapsules which, in their protein-carbohydrate matrix contain a nutraceutical with bioactive ethyl esters of the ALA, LA or ALA, LA, DHA, EPA acids, and maximum 4% weight addition of ethanol translated to anhydrous pharmaceutical ethanol of the maximum strength of 99.8% in the form of drops sized less than 2µm. The disclosed method of obtaining the said foodstuff consists in introducing a nutraceutical containing bioactive ethyl esters of the ALA, LA or ALA, LA, DHA, EPA acids into the liquid protein-carbohydrate matrix, following which the ester phase is dispersed by mechanical mixing up to obtaining the form of stable emulsion which is subject to two-stage pressure homogenisation. At stage one, homogenisation is coupled with heat processing of the emulsion which is then spray-dried in the air of the temperature of 160-190°C at the inlet to the drying chamber, and the powder is conditioned in the atmosphere of inert gases.

Known from patent document WO 2021/074706 A1 is a food product strengthening the immune system of living creatures, humans in particular, and the methods of obtaining it, where the indicated methods are microencapsulation, nanotechnology, and spray-drying (powder drying) of vegetable oils and oils of animal origin being the source of the omega-3, 6, and 9 acids. The described product may take the form of powder, tablet, capsule, or lozenge.

Known from patent document US 2006/0115553 A1 are methods of producing capsules of polyunsaturated omega-3 and omega-6 fatty acids, which consist in creating emulsion of unsaturated fatty acid and carrier, and spray-drying of the emulsion to produce powder.

The known methods of producing health-promoting foodstuffs containing unsaturated fatty acids or their ethyl esters in the form of powder obtained in the process of drying in fluidised bed, spray-drying, or tumble drying are laborious and require special devices.

The purpose of the present invention is to deliver unsaturated fatty acids of vegetable oil(s) or ethyl esters of fatty acids, especially linseed oil, in the purest and best absorbed form, i.e. powder, where it is an abundant source of unsaturated omega-3 (ALA) and omega-9 (LA) fatty acids, and to develop the method of producing the product.

It is recognised that dry composition may protect unsaturated fatty acids from oxidative destruction. Moreover, the form of powder enables easier addition to numerous products on the one hand, and more effective modification of the product taste on the other hand, which paves the way to its application in both brand new and popular products.

The surveys held recently among consumers show clearly that when choosing a product the final recipient is ever more frequently guided by its taste and ease of its consumption. Ethyl esters of fatty acids of linseed oil, as the source of the best-absorbed necessary unsaturated fatty acids not produced by the human organism, should find their way to the daily diet of every human being. For years, their application shows how much their taste and form affects the consumers' expectations and how frequently they limit their consumption.

According to this invention, a foodstuff contains a mix of ethyl esters of fatty acids of vegetable oil(s) and silica, where the amount of ethyl esters of fatty acids of vegetable oil(s) is between 60% and 74% by weight, and the amount of silica is between 40% and 26% by weight, and the amounts of the said ethyl esters and silica add up to 100% by weight of the said mix. Preferably, the ethyl esters of fatty acids are ethyl esters of linseed oil and/or evening primrose oil and/or borage oil and/or black currant oil and/or nigella oil and/or hemp oil and/or camelina oil and/or algae oil and/or fish oil.

Preferably, the said mix contains 70% of ethyl esters of fatty acids of vegetable oil(s) and 30% of silica by weight.

Preferably, the foodstuff further contains flavour aromas and/or sweeteners and/or bovine colostrum and/or vitamins.

A foodstuff production method according to this invention is characterised in that silica is added to liquid ethyl esters of fatty acids of vegetable oil(s) and all is mixed in a mixer until a mix in the form of powder is obtained, where the amount of ethyl esters of fatty acids of vegetable oil(s) is between 60% and 74% by weight, and the amount of silica is between 40% and 26% by weight, and the amounts of the said ethyl esters and silica add up to 100%.

Preferably, the amount of ethyl esters of fatty acids of vegetable oil(s) is 70% by weight, and the amount of silica is 30% by weight.

Preferably, the ethyl esters of fatty acids are ethyl esters of linseed oil and/or evening primrose oil and/or borage oil and/or black currant oil and/or nigella oil and/or hemp oil and/or camelina oil and/or algae oil and/or fish oil.

Preferably, before silica is added to ethyl esters of fatty acids of vegetable oil(s), flavour aromas and/or sweeteners and/or bovine colostrum and/or vitamins are added and mixed to obtain uniform consistency, whereupon silica is added while mixing, and all is mixed to obtain the product in the form of powder. Preferably, the mixing process is carried out at the temperature of 20-24°C.

In another variant of the invention, a foodstuff contains a mix of vegetable oil(s) and silica, where the amount of vegetable oil(s) is between 60% and 74% by weight, and the amount of silica is between 40% and 26% by weight, and the amounts of vegetable oil(s) and silica add up to 100% of the said mix by weight. Preferably, the vegetable oil is linseed oil and/or evening primrose oil and/or borage oil and/or black currant oil and/or nigella oil and/or hemp oil and/or camelina oil and/or algae oil and/or fish oil.

Preferably, the mix contains 70% of vegetable oil(s) and 30% silica by weight. Preferably, the foodstuff additionally contains flavour aromas and/or sweeteners and/or bovine colostrum and/or vitamins.

A foodstuff production method according to this invention is characterised in that silica is added to vegetable oil(s) and the two are subject to the process of mixing in a mixer until the mix in the form of powder is obtained, where the amount of vegetable oil(s) is between 60% and 74% by weight, and the amount of silica is between 40% and 26% by weight, and the amounts of the said vegetable oil(s) and silica add up to 100%.

Preferably, the amount of vegetable oil(s) is 70% by weight, and the amount of silica is 30% by weight.

Preferably, the vegetable oil is linseed oil and/or evening primrose oil and/or borage oil and/or black currant oil and/or nigella oil and/or hemp oil and/or camelina oil and/or algae oil and/or fish oil.

Preferably, before silica is added to vegetable oil(s), flavour aromas and/or sweeteners and/or bovine colostrum and/or vitamins are added and mixed to obtain uniform consistency, whereupon silica is added while mixing, and all is mixed to obtain the product in the form of powder.

Preferably, the mixing process is carried out at the temperature of 20-24°C.

The foodstuff according to this invention, being in the form of powder, enables mixing it in juices, milk, or adding it directly as an additive to ice cream, dairy products, or other products, where adding it in its oil form would carry obvious limitations. The definite ease of disguising the taste of esters and the available option of changing it from sweet to salty, or from subtle to distinct enable the foodstuff's use in other food products such as breadstuff, cold meats, beverages, or sauces. The so-obtained product, closed in a hermetic container makes it consumable within up to 24 months following the production date, and the once-opened portion should be consumed within up to 30 days.

The invention is presented closer in embodiments.

### Embodiment I

Prepared was a batch of 1000 g and the following % composition by weight:
a) ethyl esters of fatty acids of linseed oil by Holistic Medica sp. z o.o. containing:
   omega-3 (ca. 56 %), omega-6 (ca. 16.3 %), omega-9 (18%) acids: 60.00
b) silica: 40.00 At the room temperature of 20-24°C ethyl esters were poured into a mixer, following which silica was poured while mixing. The mixing process was continued until a uniform structure product in the form of powder was obtained, its colour cream and its consistency that of flour.

### Embodiment II

Prepared was a batch of 1000 g and the following % composition by weight:

| | |
|---|---|
| a) ethyl esters of fatty acids of linseed oil by Holistic Medica sp. z o.o. containing: | |
| omega-3 (ca. 56 %), omega-6 (ca. 16.3 %), omega-9 (18%) acids: | 74.00 |
| b) silica: | 26.00 |

Further procedure is as in Embodiment I.

### Embodiment III

Prepared was a batch of 1000 g and the following % composition by weight:

| | |
|---|---|
| a) ethyl esters of fatty acids of the evening primrose oil containing: | |
| omega-3 (ca. 56 %), omega-6 (ca. 16.3 %), omega-9 (18%) acids: | 60.00 |
| b) silica: | 40.00 |

At the room temperature of 20-24°C ethyl esters were poured into a mixer, following which silica was poured while mixing. The mixing process was continued until a uniform structure product in the form of powder was obtained, its colour cream and its consistency that of flour.

### Embodiment IV

Prepared was a batch of 800 g and the following % composition by weight:

| | |
|---|---|
| a) ethyl esters of fatty acids of linseed oil by Holistic Medica sp. z o.o. containing: | |
| omega-3 (ca. 56 %), omega-6 (ca. 16.3 %), omega-9 (18%) acids: | 30.00 |
| b) isomalt (sweetener): | 40.25 |
| c) silica: | 13.75 |
| d) raspberry aroma: | 6.25 |
| e) colostrum: | 6.25 |
| f) milk aroma: | 3.125 |
| g) sodium saccharin (sweetener): | 0.375 |

At the room temperature of 20-24°C ethyl esters (a) were poured to a mixer, following which the following were added one after another whilst mixing continuously: milk aroma (f), raspberry aroma (d), isomalt (b), sodium saccharin (g), colostrum (e). Once uniform consistency had been obtained, silica (c) was added. All was mixed until product of uniform structure in the form or powder was obtained, its consistency that of flour.

### Embodiment V

Prepared was a batch of 800 g and the following % composition by weight:

| | |
|---|---|
| a) ethyl esters of fatty acids of linseed oil by Holistic Medica sp. z o.o. containing: | |
| omega-3 (ca. 56 %), omega-6 (ca. 16.3 %), omega-9 (18%) acids: | 30.00 |
| b) isomalt (sweetener): | 27.50 |
| c) cocoa powder: | 18.75 |
| d) silica: | 13.75 |
| e) colostrum: | 6.25 |
| f) milk aroma: | 3.125 |
| g) sodium saccharine (sweetener): | 0.625 |

At the room temperature of 20-24°C ethyl esters (a) were poured to a mixer, following which the following were added one after another whilst mixing continuously: milk aroma (f), isomalt (b), cocoa powder (c), sodium saccharin (g), colostrum (e). Once uniform consistency had been obtained silica (d) was added. All was mixed until product of uniform structure in the form or powder was obtained, its consistency that of flour.

In other embodiments, ethyl esters of fatty acids of linseed oil were replaced with ethyl esters of fatty acids of evening primrose oil, or ethyl esters of fatty acids of borage oil, or ethyl esters of fatty acids of black currant oil, or ethyl esters of fatty acids of nigella oil, or ethyl esters of fatty acids of hemp oil, or ethyl esters of fatty acids of camelina oil, or ethyl esters of fatty acids of algae oil, or ethyl esters of fatty acids of fish oil in the amounts as in the embodiments described above, and the procedure was as in the embodiments described above.

Possible too, is the use of mixes of ethyl esters of fatty acids of the oils listed above, in the amounts as in the embodiments described above, in the procedure as in the embodiments described above.

### Embodiment VI

Prepared was a batch of 1000 g and the following % composition by weight:

| | |
|---|---|
| a) cold-pressed evening primrose oil by Oleofarm: | 72.70 |
| b) silica: | 27.30 |

The procedure is as in Embodiment I.

### Embodiment VII

Prepared was a batch of 1000 g and the following % composition by weight:

| | |
|---|---|
| a) cold-pressed linseed oil with vitamin D (S'oley): | 70.00 |
| b) silica: | 30.00 |

The procedure is as in Embodiment I.

Used in all embodiments was food-grade silica available in the market.

## Claims

1. A foodstuff **characterised in that** it contains a mix of ethyl esters of fatty acids of vegetable oil(s) and silica, where the amount of ethyl esters of fatty acids of vegetable oil(s) is between 60% and 74% by weight, and the amount of silica is between 40% and 26% by weight, and the amounts of the said ethyl esters and silica add up to 100% of the said mix by weight.

2. The foodstuff according to claim 1, **characterised in that** the ethyl esters of fatty acids are ethyl esters of fatty acids of linseed oil and/or evening primrose oil and/or borage oil and/or black currant oil and/or nigella oil and/or hemp oil and/or camelina oil and/or algae oil and/or fish oil.

3. The foodstuff according to claim 1 or 2, **characterised in that** the mix contains 70% of ethyl esters of fatty acids of vegetable oil(s) and 30% of silica by weight.

4. The foodstuff according to any one of the claims 1 to 3, **characterised in that** it further contains flavour aromas and/or sweeteners and/or bovine colostrum and/or vitamins.

5. A foodstuff production method **characterised in that** silica is added to liquid ethyl esters of fatty acids of vegetable oil(s) and all is mixed in a mixer until a mix in the form of powder is obtained, where the amount of ethyl esters of fatty acids of vegetable oil(s) is between 60% and 74% by weight, and the amount of silica is between 40% and 26% by weight, and the amounts of the said ethyl esters and silica add up to 100%.

6. The method according to claim 5, **characterised in that** the amount of ethyl esters of fatty acids of vegetable oil(s) is 70% by weight, and the amount of silica is 30% by weight.

7. The method according to claim 5 or 6, **characterised in that** the ethyl esters of fatty acids are ethyl esters of linseed oil and/or evening primrose oil and/or borage oil and/or black currant oil and/or nigella oil and/or hemp oil and/or camelina oil and/or algae oil and/or fish oil.

8. The method according to any one of the claims 5 to 7, **characterised in that** before silica is added to ethyl esters of fatty acids of vegetable oil(s), flavour aromas and/or sweeteners and/or bovine colostrum and/or vitamins are added and mixed to obtain uniform consistency, whereupon silica is added while mixing, and all is mixed to obtain the product in the form of powder.

9. The method according to any one of the claims 5 to 8, **characterised in that** the mixing process is carried out at the temperature of 20-24°C.

10. A foodstuff **characterised in that** it contains a mix of vegetable oil(s) and silica, where the amount of vegetable oil(s) is between 60% and 74% by weight, and the amount of silica is between 40% and 26% by weight, and the amounts of vegetable oil(s) and silica add up to 100% of the said mix by weight.

11. The foodstuff according to claim 10, **characterised in that** the vegetable oil is linseed oil and/or evening primrose oil and/or borage oil and/or black currant oil and/or nigella oil and/or hemp oil and/or camelina oil and/or algae oil and/or fish oil.

12. The foodstuff according to claim 10 or 11, **characterised in that** the mix contains 70% of vegetable oil(s) and 30% of silica by weight.

13. The foodstuff according to any one of the claims 10 to 12, **characterised in that** it additionally contains flavour aromas and/or sweeteners and/or bovine colostrum and/or vitamins.

14. A foodstuff production method **characterised in that** silica is added to vegetable oil(s) and the two are subject to the process of mixing in a mixer until the mix in the form of powder is obtained, where the amount of vegetable oil(s) is between 60% and 74% by weight, and the amount of silica is between 40% and 26% by weight, and the amounts of the said vegetable oil(s) and silica add up to 100%.

15. The method according to claim 14, **characterised in that** the amount of vegetable oil(s) is 70% by weight, and the amount of silica is 30% by weight.

16. The method according to claim 14 or 15, **characterised in that** the vegetable oil is linseed oil and/or evening primrose oil and/or borage oil and/or black currant oil and/or nigella oil and/or hemp oil and/or camelina oil and/or algae oil and/or fish oil.

17. The method according to any one of the claims 14 to 16, **characterised in that** before silica is added to the vegetable oil(s) flavour aromas and/or sweeteners and/or bovine colostrum and/or vitamins are added and mixed to obtain uniform consistency, whereupon silica is added while mixing, and all is mixed to obtain the product in the form of powder.

18. The method according to any one of the claims 14 to 17, **characterised in that** the mixing process is carried out at the temperature of 20-24°C.
